# EUROPEAN PATENT APPLICATION

(11) **EP 1 286 309 A2**
(43) Date of publication of application: **26.02.2003**
(21) Application number: 02100184.7
(22) Date of filing: 22.02.2002
(51) Int. Cl.: G06T 17/00

(54) **An automated CAD guided sensor planning process**

(30) Priority: 20.03.2001 US 812403
(71) Applicant: Ford Global Technologies, Inc., Dearborn, Michigan 48126 (US)
(72) Inventor: Macneille, Perry, Robinson, 48076, Lathrup Village, MI 48076 (US); Rankin, James, Stewart II, Novi, MI 48374 (US); Song, Mumin, Ann Arbor, MI 48105 (US); Chen, Yifan, Ann Arbor, MI 48108 (US)
(74) Representative: Messulam, Alec Moses

(57) **Abstract**

A method of automatically determining one or more sensor locations for sensing a surface of a physical part includes a CAD model 12 and a sensor model 14. The CAD model 12, which is representative of the surface of the physical part, and the sensor model 14, which is representative of a 3-D image capturing sensor 22 are both input into a sensor planner 16. The sensor planner 16 subdivides the CAD model 12 of the physical part into a plurality of discrete partitions. The plurality of discrete partitions are then grouped into one or more subgroups based on visibility criterion. The sensor planner 16 then automatically outputs a set of viewing positions 18 and orientations for the sensor 22.

## Description

The invention relates generally to a CAD-guided sensor planning method and more particularly to an automated CAD-guided sensor planning method to assist in accurately determining part surface geometry.

Part inspection is an important step in manufacturing and many part inspection techniques are known. Recently, automated part dimensional inspection techniques have been developed to solve some of the problems that are present in traditional approaches, including accuracy and speed. An essential part of every automated inspection system is finding suitable configurations for the sensors or sensor planning so that the inspection task can be satisfactorily performed.

One prior known system proposed an automated dimensional inspection environment for manufactured parts using a Coordinate Measuring Machine (CMM). This system uses CAD databases to generate CMM sampling plans for inspecting the surface of the part. This CMM method is accurate, but extremely time consuming as it employs a point-by-point sampling system. The method becomes even more time consuming when the system is used to measure the surface of large parts. Other traditional point-scan devices, such as line-scanning devices and laser scanners suffer from the same problems. Moreover, this method can only be used when a CAD model is available.

Active optical sensing methods are also known for part surface inspection. These methods allow for a faster dimensional inspection of a part. One current active optical sensing method that has been successfully employed for various applications is the structured light method, which obtains 3-D coordinates by projecting specific light patterns on the surface of the object to be measured. However, sensor configurations, such as position, orientation, and optical settings, are critical to the structured light method. These configurations affect measuring accuracy and efficiency directly. In most prior structured light applications, sensor configuration planning was based on human operator experience, which resulted in considerable human error and thus, low efficiency. These methods are also typically not as accurate as the point-scan methods, which are discussed above.

Currently, sensor planning in a computer vision environment attempts to understand and quantify the relationship between the object to be viewed and the sensor observing it in a model-based, task directed way. Recent advancements in 3-D optical sensor technologies now allow for more efficient part inspection. However, these sensor technologies are still too inefficient for use in most commercial production processes.

Presently, the most widely used 3-D method for sensor planning for part inspection is the "click and check" method. In the click and check method, the user is presented with a graphical display of an object to be measured based on a CAD model. Based on the CAD model, a file is written and then translated into another file that a CMM/robotics off-line programming package can read. The programming package, such as SILMA or ROBCAD, is used to develop a program that will move the CMM/robot along the predefined path. By using the off-line programming package, a user/operator must imagine the 3-D object in space and then manually insert locations and view directions for the sensor by clicking the points in the graphical display. Having developed a set of sensor locations, each location must be verified to ensure that it was acceptable and that the entire surface is covered. Usually, this is done using a physical part and a CMM or a robot.

The click and check method also provides a technique for connecting the locations in order to form a sensor path. As is known, other technology is employed to control how the CMM or the robot moves the area scanner between locations without collisions or kinematic inversion problems. The click and check method is extremely time consuming, difficult to perform, and also unreliable. Moreover, because it requires human intervention in selection of the view direction of the scanner for each location, it is susceptible to significant error and thus, inefficiency.

It is an object of the present invention to provide a method of sensor planning that reduces or eliminates operator-involvement in time-consuming off-line programming.

According to a first aspect of the invention there is provided a method of automatically determining one or more sensor locations for sensing a surface of a physical part, characterised in that the method comprises the steps of inputting a CAD model, which is representative of the surface of the physical part into a sensor planner; inputting a sensor model, which is representative of a 3D image capturing sensor, into the sensor planner, subdividing said CAD model of the surface of the physical part into a plurality of discrete partitions, grouping said plurality of discrete partitions into one or more subgroups based on visibility criterion and outputting a set of viewing positions and orientations for said sensor.

The step of grouping may further comprise selecting a seed partition from said plurality of partitions.

The step of grouping may further comprise forming at least one flat patch which includes all partitions adjacent to the seed partition having a normal vector that forms an angle with an average normal of said grouping that is less than a predetermined value.

The method may further comprise the formation of a plurality of flat patches that together capture the entire surface of the physical part.

The method may further comprise constructing a bounding box around the or each flat patch, the bounding box having a front face representing a direction where the projected area of each flat patch onto the front face is maximised.

The method may further comprise splitting a flat patch if the front face is too large for the sensor to capture the flat patch and satisfy a predetermined resolution requirement.

The method may further comprise determining a sensor position closest to the surface of the physical part that encompasses all flat patches.

The method may further comprise determining a sensor position farthest from the surface of the physical part that meets predetermined resolution requirements.

The method may further comprise locating a sensor position that meets a predetermined resolution requirement.

The method may further comprise the step of outputting the located sensor position to a controller in order to automatically position said sensor.

Preferably, each partition of the plurality of discrete partitions may be triangular in shape.

According to a second aspect of the invention there is provided an automated CAD-guided sensor planning system, comprising a CAD model, which is a computer representation of one or more surfaces of a physical object that are to be measured; a sensor model, which is a mathematical representation of a 3-D image capturing sensor and a sensor planner that receives said CAD model and said sensor model and utilizes them to automatically determine a set of sensor viewing positions and orientations.

The sensor model may includes descriptions of one or more variables about the sensor visibility, resolution, field of view, focal length or depth of field.

The system may further include a controller for receiving said set of sensor viewing positions and orientations and using them to control a physical device to locate said sensor accordingly.

The controlled physical device may be a coordinate measurement machine or a robot.

According to a third aspect of the invention there is provided an automated CAD-guided sensor planning method, comprising providing a CAD model of a physical part to be examined; providing a sensor model representative of a 3-D image capturing device; tessellating at least one surface of said CAD model of said physical part by subdividing it into a plurality of partitions; determining at least one flat patch on said at least one surface, said flat patch being comprised of one or more of said plurality of partitions; determining a closest position for the sensor to said at least one surface that encompasses all of said at least one flat patch; determine a furthest position of the sensor to said at least one surface having sufficient resolution; and outputting a sensor location based on said closest position that encompasses said entire flat patch and said farthest position with sufficient resolution.

Preferably, the at least one surface is subdivided into a plurality of triangles.

The method may further comprise determining a closest position for the sensor to the at least one surface that encompasses all of said at least one flat patch.

The method may further comprise determining a furthest position of the sensor to said at least one surface having sufficient resolution.

The method may further comprise constructing a bounding box around said at least one flat patch, said bounding box having a front face representing a direction where the projected area of said at least one flat patch onto said front face is maximized.

The method may further comprise splitting said at least one flat patch if said front face is too large for said sensor to capture said at least one flat patch and satisfy predetermined resolution requirements.

The invention will now be described by way of example with reference to the accompanying drawing of which:-
FIGURE 1 is a schematic diagram illustrating the components of an automated CAD-guided sensor planning process in accordance with a preferred embodiment of the present invention;
FIGURE 2 is a schematic diagram illustrating the operation of an automated CAD-guided sensor planning process in accordance with a preferred embodiment of the present invention;
FIGURE 3 is a schematic diagram illustrating the technique for forming a flat patch through triangle grouping in accordance with a preferred embodiment of the present invention;
FIGURE 4 is a schematic illustration of a bounding box for determining the position and orientation of a sensor in accordance with a preferred embodiment of the present invention; and
FIGURE 5 is a flow chart demonstrating the creation of a reduced tessellated model in accordance with another preferred embodiment of the present invention.

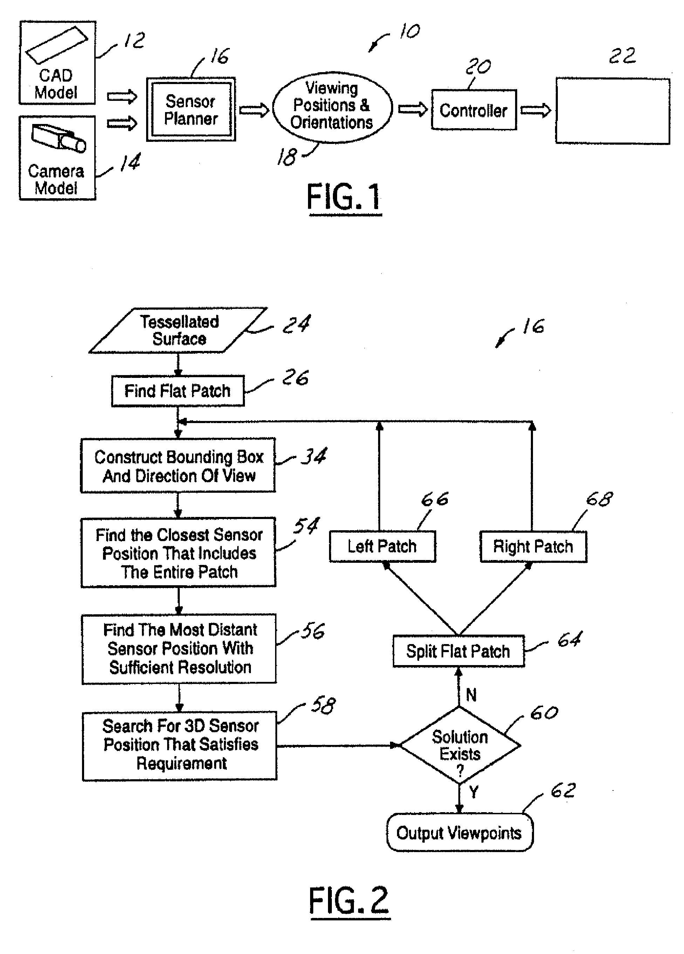

Referring now to Figure 1, an automated CAD-guided sensor planning process 10 includes a CAD model, which is generally indicated by reference number 12.

The CAD model 12 is a mathematical representation of a surface, which describes a geometric object as stored in a computer, such as a door panel or an unlimited number of other surfaces. It should be understood that the CAD model 12 can include mathematical representations for a plurality of surfaces, which are descriptive of one or more objects. The CAD model 12 can also include representations of multiple surfaces.

The CAD model 12 is preferably generated by I-DEAS, which is a commercially available software program, but could also be generated by other known systems or programs. The CAD model could be developed based on scanning in of the part or a variety of other known methods or techniques.

The process 10 also includes a camera model or sensor model, which is generally indicated by reference number 14.

The sensor model 14 is a mathematical representation of a 3-D image-capturing device that includes descriptions of or parameters regarding visibility, resolution, field of view, focal length and depth of field. The sensor model 14 may also mathematically represent more or additional descriptions or parameters. In the preferred embodiment, only a single camera is used, however, it should be understood that multiple cameras or sensors could also be utilized and controller. Further, any commercially available camera or sensor having known parameters could be utilized.

Once generated, the CAD model 12 and the sensor model 14 are each input into a sensor planner, which is generally indicated by reference number 16, where the knowledge from each model 12, 14 is analytically combined. Based on the combination of the CAD model 12 and the sensor model 14, the sensor planner 16 automatically determines a set of sensor viewing positions and orientations that will allow the entire surface of the part to be efficiently measured. The automatically determined sensor viewing positions and orientations are generally indicated by reference number 18.

The sensor position and orientation information 18 can then be input into a controller, generally indicated by reference number 20. The inputted information can be used to program a physical device 22, of the same character to capture multiple 3-D range images of a physical part corresponding to its CAD model. The physical device is preferably oriented by a CMM or robot, which appropriately positions the sensor or camera in accordance with the determined viewing positions and orientations.

The physical part can be any structure, such as is discussed above. The images thus collectively provide geometric shape information of the entire structure with required measurement accuracy.

The preferred method for capturing images on the part surface includes the use of a fringe generator to generate a fringe pattern on the part surface. Any fringe generator may be utilized, however, the preferred fringe generation system is disclosed in U.S. Patent No. 6,100,984.

Figure 2 schematically illustrates the preferred sensor planning method 10 in more detail, which generally is accomplished in the sensor planner 16. As discussed above, the sensor planning method 10 analytically combines the knowledge from the CAD model 12 and the generic 3-D sensor or camera model 14. Once the CAD model 12 and the camera model 14 are input into the sensor planner 16, the surface of the part to be measured is automatically tessellated or partitioned as generally indicated by reference number 24.

During the tessellation step, the CAD model corresponding to the surface to be measured is partitioned into a plurality of triangles that cover the entire CAD model surface (triangulation). The triangular representation of the CAD model is used as input into the manufacturing system.

The triangulation functionality is available in several commercially available CAD systems, including I-DEAS, Cartia and Nugragh. The purpose of triangulation is to ensure a common data interface from the CAD design to manufacturing CMM systems.

While a triangular mesh is the preferred format that is used to partition the surface, other forms of discrete representation, as well as continuous mathematical surface representations, may alternatively be utilized. The only requirement necessary in tessellating the surface is that a continuous surface representation that is properly connected is provided.

Once the tessellation step 24 of the CAD surfaces have been completed and the surface is composed of triangular facets, a plurality of flat patches are grown out of the tessellated surface, as generally indicated by reference number 20. The flat patches are formed by aggregating triangular facets that meet the "flat patch" criteria. The flat patch criteria imposes a normality requirement on any given flat patch that can be arbitrarily set to meet the area scanners incident angle requirement, i.e. light rays striking the measured surface must not have too high an angle of incidence. The flat patch criteria allows the CAD surface to be broken up into patches that do not have excessive curvature and do not occlude, i.e. have obstruction of some parts of the surface by others. While triangulation is preferably utilized, other ways of partitioning or subdividing the surface may be utilized.

After the tessellated surface has been partitioned into triangular regions based on the visibility criteria, a seed triangular or triangle is chosen by the sensor planner 16.

Thereafter, a preferred grouping method is performed gathering the neighbouring or adjacent triangles around the seed triangle for which the angles between all normals of the triangles form an angle with the average normal of the grouping that is less than a predetermined value or amount. This value or amount is determined based on the complexity of the model.

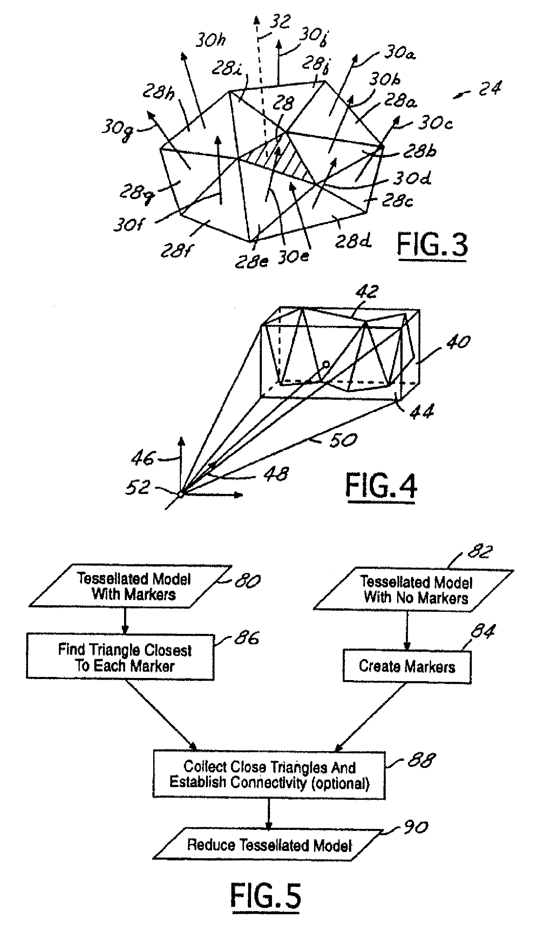

Figure 3 is an exemplary illustration of this grouping method of triangles in order to form a flat patch. As shown in Figure 3, a tessellated surface 24 has a plurality of individual triangular partitions.

One of the triangular partitions is a seed triangle 28, which is shaded in the figure, the remaining partitions, adjacent the seed triangle 28, are identified by reference numbers 28a through 28j. The normals of each of these partitions 28a through 28j adjacent the seed triangle 28 have normal vectors, represented by the solid arrow vectors 30a through 30j The average normal vector of this group of triangles is represented by the dashed arrow 32. In the example shown in Figure 3, the angle between any one of the solid arrows and the dashed arrow 32 is less than the predetermined value or amount. The result is a so-called flat patch for which the average normal direction, i.e. the dashed vector 32, can guaranty total visibility of the patch.

To the extent the vectors of any partitions have an angle with respect to the average normal vector this process must be repeated to create additional flat patches. This grouping process thus ends up with a set of flat patches collectively capturing the entire model.

In accordance with the preferred method detailed above, one or more flat patches are created on the tessellated surface 24. Flat patches formed this way are entirely visible. However, it may be too large an area for a 3-D area sensor to capture with sufficient resolution. In addition, the focus character of the sensor, such as a digital camera, needs to be accounted for, as well as to produce an "in-focus" image data analysis. To address these practical issues efficiently, in accordance with the present invention, a bounding box is preferably constructed as generally indicated by reference number 34.

Referring now to Figure 4, a bounding box 40 is constructed around a particular flat patch 42 that is under consideration. The bounding box 40 is constructed such that the front face 44 of the bounding box 40 has a normal, which represents a direction where a projected area of the flat patch onto the face is maximized. The up direction 40 of the front face 44 is chosen such that the smallest rectangular field of view with the given image width-to-height ratio can cover all the projected points from the flat patch 42. If the front face 44 of the boundary box 40 is too large for the sensor to capture with satisfactory resolution, it will be partitioned until the resolution criteria are met.

Following a typical 3-D area sensor model, the bounding box 40 is used to determine the location and orientation of a sensor. The line parallel to the normal of and passing through the centre of the front face of the bounding box can be used as the line of sight 48 to position the sensor. This line then automatically becomes the direction of view.

The view-up vector 46, which is used to orient the sensor with respect to the direction of view, is chosen as a vector parallel to the vertical edge of the front face 44.

The field of view 50 is shown generally as rectangular and helps determine the exact location of the sensor, the position of which is designated generally by reference number 52.

To ensure that the image is in focus, the depth of field information of the sensor model can be used to bracket a segment on the line of sight, within which all locations are acceptable.

To bracket the line of sight, the sensor planner 16 determines the closest sensor position that includes the entire flat patch, as generally indicated by reference number 54.

Also, the most distant sensor position having sufficient resolution is determined, as generally indicated by reference number 56.

The sensor planner 16 then determines whether there are any sensor positions that satisfy the above requirements, as generally indicated by reference number 58. The sensor planner 16 then determines whether a solution exists, as generally indicated by reference number 60.

If a solution exists, the solution is output, as generally indicated by reference number 62. If, however, no solution exists, such as because the location determined by the resolution criteria falls outside the range, then the flat patch may have to be further reduced in size, as generally indicated by reference number 64. As shown generally, the illustrative flat patch is split into a left patch 66 and a right patch 68. The same process described above would then need to be repeated for each flat patch 66, 68 to determine the appropriate sensor position and orientation.

It should be understood that a flat patch can be subdivided into more than two sections. With this method, a set of view locations and orientations of the 3-D sensor is gained.

The flow chart shown in Figure 2 illustrates the implementation of the system 10, which automates the off-line programming process for CMM and requires no operator assistance. The technology of the present invention can be utilized in robotic applications such as robotic painting, off-line programming, robotic spray, and a variety of other robotic applications. Additionally, several automotive components had been used to demonstrate the advantages of this method and the practical capabilities of the automated CAD-guided sensor planning module. Using the current click and check package, as set forth above, it typically takes operators days and weeks to find out suitable positions and orientations of the 3-D sensor. Using the disclosed method, however, several cases had been tested on a Pentium 3 500 MHz PC, which computes the location and orientation of a 3-D sensor with 470 x 350 pixel resolution, 57-degree angle field of view and 100mm to 300mm depth of view. The time needed to get the results is only a magnitude of minutes as evidenced from the table set forth below.

| PART | NO. OF TRIANGLES | NO. OF "FLAT PATCHES" | NO. OF VIEW POINTS | RUNNING TIME |
|---|---|---|---|---|
| Cylinder | 70 | 5 | 8 | 6 sec. |
| Front Door | 584 | 24 | 27 | 20 sec. |
| Gauge | 617 | 18 | 23 | 22 sec. |
| Fender | 2602 | 109 | 116 | 1.4 min. |
| M32510 | 3379 | 19 | 23 | 4 min. |

In accordance with another preferred embodiment, the CAD-guided sensor planning process 10 can also be utilized for selective part inspection ("SPI"), which is an application that can result in much faster measurement performance.

SPI is a scenario where only selected areas, curves or points of a part under inspection require measuring or are desired to be measured. For example, checking dimensions of a stamped sheet metal part only concerns those points that define the extent of the part in space.

Checking if a particular part can meet another part properly for assembly purposes concerns only the boundary where the two parts meet. Through use of the disclosed process 10, a sensor path configuration that is unique for the interested areas on the part can be quickly created without having to generate a full set of sensor locations that collectively allow coverage of the entire part.

In accordance with the preferred process, an area of interest on a part, regardless of whether it is an area, a curve, or a point, can be discretely represented by a set of points called markers.

As shown in Figure 5, the markers can be generated in a CAD system before the part is tessellated and exported to the CAD-guided sensor path planning system. In this instance, a tessellated model with markers would be generated, as generally indicated by reference number 80.

Alternatively, a tessellated model with no markers could be provided, so long as a part model is available for input, as generally indicated by reference umber 82. The markers can then be generated within the CAD-guided sensor path planning system, as generally indicated by reference number 84.

Once the markers are available, they can be utilized to determine the locations of the sensor. First, the markers are processed so that each is associated with a triangle of the tessellated model, as generally indicated by reference number 86. This can be done by applying the minimum distance criterion. It will be understood that this step is not necessary if the markers are defined within the CAD-guided sensor planning system by clicking points on the model in which case the triangles are readily available. This is shown by the right branch of Figure 5.

Next, these triangles are collected and considered a reduced form of the original model. Additionally, a procedure may be used to re-establish the connectivity among these triangles, if possible, for more efficient use of the CAD-guided sensor patch planning, as generally indicated by reference number 88. It will be understood that this step is not necessary for the operation of the process.

Lastly, the CAD-guided sensor planning process can be applied to generate sensor locations for this reduced form of the model, as generally indicated by reference number 90. The determination of the reduced tessellated model occurs in much the same way as with the full model. By applying the method to the reduced form, the process can be completed in a shorter time, thereby resulting in productivity gain for SPI applications.
The sensor system 10 can be utilized in a variety of applications. For example, the sensor system can be used to assist in soft die development, such as by fingerprinting the soft tool for the hard die. This allows for the capture of knowledge and work is used to create the soft tool. Further, the system 10 can be used to scan a panel taken out of a die and project that back onto the die. The scanned information is then compared to the CAD model. This allows a sophisticated die maker to interpret and analyze this information. Additionally, with the process, a CAD model of a port can be shown on the corresponding physical part to perform part verification.

The sensor system 10 can also be used to capture production problems. For example, the headlights and the headlight openings of a vehicle could be scanned to determine which of the two parts is causing interference so that the production problems can be corrected. This allows parts to be tested individually as they are coming down the line instead of waiting for a statistically significant sampling size, as is currently necessary. Moreover, the disclosed system 10 can be used to fingerprint a hard tool when it was originally created. This is important because as a hard tool is used, its shape can be changed. Thus, if a hard tool breaks later into its life the fingerprint of the part at the time it broke will most likely not be the same as the fingerprint when the hard tool was originally created. This process will also allow the life of a hard tool to be predicted.

Another application for the disclosed system 10 is with a vendor or supplier company of parts. If the vendor has an analytical CAD model of the part or parts being made, periodic scan can be performed on the part during development. This process could reveal that although the part does not fall within the tolerances specified by the manufacturer, it works and does not need to be modified any further.

The system 10 could also be used to scan a vehicle wheel to determine if it has five nuts located thereon or not. The above applications are only illustrative and the disclosed system can be utilized in a variety of other applications as will be understood by one of skill in the art.

It can therefore be seen that three dimensional (3D) optical sensor technologies make it possible to locate millions of points simultaneously on an opaque surface in the amount of time it would previously have taken to measure a single point on the same surface.

By taking numerous measurements from different sensor locations, it is possible to acquire surface information on large or complex surfaces quickly. This provides the capability of rapidly measuring the entire surface of automobiles, components, tools, dies and a variety of other surfaces in the time previously required to measure a small number of points on a surface using current technology.

In accordance with the present invention, the process for determining the sensor locations and other sensor variables can be reduced from weeks to hours thereby providing a production feasible process.

Although the present invention is most advantageously used in connection with a coordinate measurement machine ("CMM") it may also be used with other machines, such as robots, that allow a sensor to be located to effectuate the necessary surface measurements.

When using the invention with CMM's it is preferable to allow the sensors to make entire surface measurements because entire surface measurements are significantly more useful than single point or line scan data. The capability of making entire surface measurements allows for the confirmation of product uniformity and fit-up through better dimensional inspection, which improves dimensional control of individual components.

Additionally, through the use of the present invention, the mating of parts manufactured in several distant locations can be compared for compatibility before they leave their respective plants. Thus, if they do not properly mate based on their respective surface measurements, corrective action can be taken prior to their shipment. Additionally, the disclosed invention allows stamping tool tryout to be more methodical by maintaining a record of the various evolutions of a tryout tool.

While the invention has been described in terms of preferred embodiments, it will be understood, of course, that the invention is not limited thereto since modifications may be made by these skilled in the art, particularly in light of the foregoing teachings.

## Claims

1. A method of automatically determining one or more sensor locations for sensing a surface of a physical part, **characterised in that** the method comprises the steps of inputting a CAD model (12), which is representative of the surface of the physical part into a sensor planner (16), inputting a sensor model (14), which is representative of a 3D image capturing sensor, into the sensor planner (16), subdividing said CAD model of the surface of the physical part into a plurality of discrete partitions (28, 28a-j), grouping said plurality of discrete partitions (28, 28a-j) into one or more subgroups based on visibility criterion and outputting a set of viewing positions and orientations for said sensor.

2. A method as claimed in claim 1, wherein the step of grouping further comprises selecting a seed partition (28) from said plurality of partitions (28, 28a-j).

3. A method as claimed in claim 2 wherein the step of grouping further comprises forming at least one flat patch (42) which includes all partitions adjacent to the seed partition (28) having a normal vector that forms an angle with an average normal of said grouping that is less than a predetermined value.

4. A method as claimed in claim 3 wherein the method comprises the formation of a plurality of flat patches (42) that together capture the entire surface of the physical part.

5. A method as claimed in claim 3 or in claim 4 wherein the method further comprises constructing a bounding box (40) around the or each flat patch (42), the bounding box (40) having a front face (44) representing a direction where the projected area of each flat patch (42) onto the front face (44) is maximised.

6. A method as claimed in claim 5 further comprising splitting a flat patch (42) if the front face (44) is too large for the sensor to capture the flat patch (42) and satisfy a predetermined resolution requirement.

7. A method as claimed in any of claims 3 to 6 wherein the method further comprises determining a sensor position closest to the surface of the physical part that encompasses all flat patches (42).

8. A method as claimed in any of claims 3 to 7 wherein the method further comprises locating a sensor position that meets a predetermined resolution requirement.

9. A method as claimed in claim 8 wherein the method further comprises the step of outputting the located sensor position to a controller in order to automatically position said sensor.

10. A method as claimed in any of claims 1 to 9 wherein each partition (28, 28a-j) of the plurality of discrete partitions (28, 28a-j) is triangular in shape.
